(19) Europäisches Patentamt
European Patent Office
Office européen des brevets

(11) Veröffentlichungsnummer: **0 374 646 B1**

# (12) EUROPÄISCHE PATENTSCHRIFT

(45) Veröffentlichungstag der Patentschrift: **27.04.94**

(51) Int. Cl.[5]: **C08F 8/12**

(21) Anmeldenummer: **89122748.0**

(22) Anmeldetag: **09.12.89**

## (54) Verfahren zur Herstellung von stabilen Wasser-in-Öl-Emulsionen von hydrolisierten Polymerisaten von N-Vinylamiden und ihre Verwendung.

(30) Priorität: **20.12.88 DE 3842820**

(43) Veröffentlichungstag der Anmeldung:
**27.06.90 Patentblatt 90/26**

(45) Bekanntmachung des Hinweises auf die Patenterteilung:
**27.04.94 Patentblatt 94/17**

(84) Benannte Vertragsstaaten:
**AT BE CH DE ES FR GB IT LI NL SE**

(56) Entgegenhaltungen:
**EP-A- 0 185 935**
**EP-A- 0 262 577**
**FR-A- 2 333 815**

(73) Patentinhaber: **BASF Aktiengesellschaft**
**Carl-Bosch-Strasse 38**
**D-67063 Ludwigshafen(DE)**

(72) Erfinder: **Hartmann, Heinrich, Dr.**
**Weinheimer Strasse 46**
**D-6703 Limburgerhof(DE)**
Erfinder: **Denzinger, Walter**
**Wormser Landstrasse 65**
**D-6720 Speyer(DE)**
Erfinder: **Kroener, Michael, Dr.**
**Eislebener Weg 8**
**D-6800 Mannheim 31(DE)**
Erfinder: **Sendhoff, Norbert, Dr.**
**Auf der Wart 16**
**D-6718 Gruenstadt(DE)**
Erfinder: **Freudenberg, Enrique, Dr.**
**Bayernstrasse 4**
**D-6707 Schifferstadt(DE)**

EP 0 374 646 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Partiell hydrolysierte Polymerisate von N-Vinylformamid sind beispielsweise aus der US-PS 4 421 602 bekannt. Die darin beschriebenen linearen basischen Polymerisate enthalten als charakteristische Komponenten 90 bis 10 Mol-% Vinylamin-Einheiten und 10 bis 90 Mol-% N-Vinylformamid-Einheiten.Sie werden durch Polymerisieren von N-Vinylformamid und Hydrolysieren der Polymerisate in gelöster Form in Gegenwart von Säuren oder Basen hergestellt. Die Polymerisation des N-Vinylformamids kann zwar auch nach Art einer Wasserin-Öl-Polymerisation vorgenommen werden, jedoch gelingt es nicht, daraus durch Hydrolyse stabile Wasser-in-Öl-Emulsionen der verseiften Polymerisate herzustellen.

Aus der US-PS 4 623 699 ist ein Verfahren zur Herstellung von pulverförmigen, linearen, basischen Polymerisaten bekannt, die Vinylamin- und N-Vinylformamid-Einheiten einpolymerisiert enthalten, bei dem man pulverförmige Polymerisate des N-Vinylformamids in Gegenwart von höchstens 5 Gew.-% Wasser, bezogen auf das eingesetzte Polymerisat, mit einer gasförmigen Halogenwasserstoffsäure hydrolysiert. Die Hydrolyse des Polymeren wird vorzugsweise in Abwesenheit von Wasser durchgeführt. Die Teilchengröße des N-Vinylformamidpolymerisats beträgt 10 bis 1000, vorzugsweise 50 bis 400$\mu$m.

Aus der EP-A-0216387 ist ein Verfahren zur Herstellung von Vinylamin-Einheiten einpolymerisiert enthaltenden wasserlöslichen Copolymerisaten durch Copolymerisieren von

(a) 95 bis 10 Mol-% N-Vinylformamid mit

(b) 5 bis 90 Mol-% eines ethylenisch ungesättigten Monomeren aus der Gruppe Vinylacetat, Vinylpropionat, $C_1$- bis $C_4$-Alkylvinylether, N-Vinylpyrrolidon, Ester, Nitrile und Amide von Acrylsäure und Methacrylsäure und anschließende Hydrolyse des Copolymerisates

bekannt, bei dem 30 bis 100 Mol-% der Formylgruppen aus dem Copolymerisat abgespalten werden. Die Herstellung der Polymerisate kann zwar als Wasser-in-Öl-Emulsion erfolgen, jedoch wird die Hydrolyse in wäßriger Suspension bzw. einer wäßrigen Lösung in Form einer Paste durchgeführt.

Aus der EP-A-0231901 ist die Herstellung von besonders hochmolekularen Polymerisaten des N-Vinylformamids bekannt, bei dem man ein besonders gereinigtes N-Vinylformamid in Form einer Wasser-in-Öl-Emulsion der Polymerisation unterwirft.

Aus der EP-A-0262577 und der EP-A-0264649 ist ebenfalls das Polymerisieren von N-Vinylformamid sowie von substituierten N-Vinylamiden in Form einer Wasser-in-Öl-Emulsion bekannt, jedoch erfolgt auch hier die Hydrolyse jeweils in wäßriger Lösung.

Verdünnte wäßrige Lösungen von hochmolekularen N-Vinylamineinheiten einpolymerisiert enthaltenden Polymerisaten haben eine sehr hohe Viskosität. So sind beispielsweise 5 %ige wäßrige Lösungen nicht mehr pumpbar. Für eine wirtschaftliche Anwendung von hydrolysierten Polymerisaten von N-Vinylamiden bieten sich daher Wasser-in-Öl-Polymeremulsionen an, die auch bei Polymergehalten von 20 bis 40 Gew.-% noch eine relativ niedrige Viskosität haben, so daß sie pumpbar sind.

Aus der GB-PS 1 562 417 ist ein Verfahren zur Herstellung von sedimentationsstabilen Wasser-in-Öl-Dispersionen von Acrylamidpolymerisaten bekannt, bei dem man die Polymerisation in Gegenwart von Emulgatoren durchführt, die erhältlich sind durch Umsetzung von Glycidylethern von $C_{10}$- bis $C_{22}$-Fettalkoholen mit 2- bis 6-wertigen Alkoholen, die 2 bis 6 Kohlenstoffatome aufweisen oder deren Monoethern, die sich von $C_{10}$- bis $C_{22}$-Alkoholen ableiten, im Molverhältnis Glycidylether zu Alkohol von 1 : 0,5 bis 1 : 6. Diese Emulgatoren können gegebenenfalls noch im Molverhältnis 1 : 1 bis 6 mit Alkylenoxiden umgesetzt sein, die 2 bis 4 Kohlenstoffatome aufweisen.

Der vorliegenden Erfindung liegt die Aufgabe zugrunde, ein Verfahren zur Herstellung von stabilen Wasser-in-Öl-Emulsionen von hydrolysierten Polymerisaten von N-Vinylamiden zur Verfügung zu stellen, wobei die Wasser-in-Öl-Polymeremulsionen der teilweise oder vollständig hydrolysierten N-Vinylamide leicht handhabbar sein sollen und die in Gegenwart von Netzmitteln invertieren, so daß sich das Polymere rasch in Wasser auflöst.

Die Aufgabe wird erfindungsgemäß gelöst mit einem Verfahren zur Herstellung von stabilen Wasser-in-Öl-Emulsionen von hydrolysierten Polymerisaten von N-Vinylamiden der Formel

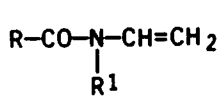 (I),

in der R,$R_1$ = H oder $C_1$- bis $C_6$-Alkyl bedeuten, durch Polymerisieren von Verbindungen der Formel I allein oder in Mischung mit anderen monoethylenisch ungesättigten Monomeren in Gegenwart von Polymerisationsinitiatoren und Emulgatoren in Form von Wasser-in-Öl-Emulsionen zu Wasser-in-Öl-Polymeremulsionen die 10 bis 70 Gew.-% einer Ölphase und 10 bis 70 Gew.-% Polymerisat enthalten, das mindestens 10 Mol-% Vinylamideinheiten aufweist, und anschließende Hydrolyse der Polymerisate bei Temperaturen von 30 bis 170 °C, so daß 5 bis 100% der Vinylamideinheiten hydrolysiert sind und Wasser-in-Öl-Polymeremulsionen mit einer Viskosität von 20 bis 10 000 mPas (gemessen bei 20 °C) vorliegen, wenn man die Hydrolyse der Polymerisate in Form der Wasser-in-Öl-Polymeremulsionen in Gegenwart von Säuren oder Basen und 1 bis 30 Gew.-%, bezogen auf die Polymerisate, an Emulgatoren durchführt, die erhältlich sind durch Umsetzung von

(A) $C_{10}$- bis $C_{22}$-Fettalkoholen mit Epichlorhydrin im Molverhältnis 1 : 0,5 bis 1 : 1,5 zu Glycidylethern,

(B) Reaktion der Glycidylether mit (1) gesättigten, 2 bis 6 OH-Gruppen enthaltenden $C_2$- bis $C_6$-Alkoholen oder (2) deren Monoether mit $C_{10}$-bis $C_{22}$-Fettalkoholen, im Molverhältnis Glycidylether zu (1) oder (2) von 1 : 0,5 bis 6 in Gegenwart von Säuren oder Basen und

(C) Alkoxylierung der Reaktionsprodukte gemäß (B) mit mindestens einem $C_2$- bis $C_4$-Alkylenoxid im Molverhältnis 1 : 1 bis 6.

Die Polymerisation der Vinylamide der Formel I erfolgt vorzugsweise bereits in Gegenwart der obengenannten Emulgatoren. Die so erhältlichen Wasser-in-Öl-Polymerisate sind leicht zu handhaben und werden als Retentions- und Entwässerungshilfsmittel sowie als Flockungsmittel bei der Herstellung von Papier verwendet.

Die Herstellung von stabilen Wasser-in-Öl-Emulsionen von hydrolysierten Polymerisaten von N-Vinylamiden erfolgt in zwei Verfahrensschritten. Im ersten Verfahrensschritt wird eine Wasser-in-Öl-Emulsion von Poly-N-Vinylamiden hergestellt, indem man N-Vinylamide der Formel

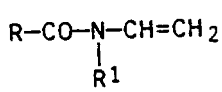

(I),

in der R, $R_1$ = H oder $C_1$- bis $C_6$-Alkyl bedeuten, der Polymerisation unterwirft. Vorzugsweise werden solche N-Vinylamide eingesetzt, bei denen R und $R_1$ für H stehen, d.h. N-Vinylformamid. Andere geeignete N-Vinylamide der Formel I sind beispielsweise N-Vinyl-N-methylformamid, N-Vinylacetamid und N-Vinyl-N-methylacetamid.

Die N-Vinylamide können auch zusammen mit anderen damit copolymerisierbaren monoethylenisch ungesättigten wasserlöslichen Monomeren copolymerisiert werden. Solche Comonomere sind beispielsweise monoethylenisch ungesättigte $C_3$- bis $C_5$-Carbonsäuren, deren basische Ester, Nitrile und Amide. Einzelne Verbindungen dieser Art sind beispielsweise Acrylsäure, Methacrylsäure, Maleinsäure, Fumarsäure, Crotonsäure, Itakonsäure, Acrylamid, Methacrylamid, Acrylamidoglykolsäure, Acrylnitril, Methacrylnitril, Acrylsäuremethylester, Methacrylsäuremethylester, Dimethylaminoethylacrylat, Dimethylaminoethylmethacrylat, Diethylaminoethylacrylat, Diethylaminoethylmethacrylat, Sulfonsäuregruppen enthaltende Monomere, z.B. Vinylsulfonsäure, Allylsulfonsäure, Methallylsulfonsäure, Styrolsulfonsäure, Acrylsäure-(3-sulfopropyl)-ester, Methacrylsäure-(3-sulfopropyl)ester und Acrylamidomethylpropansulfonsäure sowie Phosphonatgruppen enthaltende Monomere, wie Vinylphosphonat, Allylphosphonat, Methallylphosphonat und Acrylamidomethylpropanphosphonsäure. Außerdem eignen sich Hydroxyalkylester von Acrylsäure und Methacrylsäure, beispielsweise 2-Hydroxyethylacrylat, 2-Hydroxypropylacrylat, 3-Hydroxypropylacrylat sowie 2-Hydroxyethylmethacrylat und Hydroxypropylmethacrylat. Zu dieser Gruppe von Monomeren gehören auch Vinylglykol, N-Vinylpyrrolidon, N-Vinylcaprolactam, N-Vinylimidazol, N-Vinylmethylimidazol, N-Vinyl-2-methylimidazolin, N-Vinyl-2-ethylimidazolin, Vinylacetat, Vinylpropionat, Vinylbutyrat, sowie Mischungen der genannten Monomeren. Diejenigen ethylenisch ungesättigten Monomeren, die Carbonsäure-, Sulfonsäure- oder Phosphonsäuregruppen enthalten, werden bei der Polymerisation vorzugsweise in teilweise oder auch in vollständig neutralisierter Form eingesetzt. Zur Neutralisation verwendet man vorzugsweise Alkalimetallbasen, wie Natronlauge oder Kalilauge bzw. Ammoniak oder Amine, z.B. Trimethylamin, Ethanolamin oder Triethanolamin. Die basischen Monomeren werden vorzugsweise in Form der Salze mit Mineralsäuren, z.B. Salzsäure oder Schwefelsäure, oder in quaternisierter Form eingesetzt (geeignete Quarternierungsmittel sind beispielsweise Dimethylsulfat, Diethylsulfat, Methylchlorid, Ethylchlorid oder Benzylchlorid). Generell gilt für die Herstellung von Wasser-in-Öl-Polymerisaten, daß die Monomeren zunächst in Wasser gelöst, werden. Diejenigen Comonomeren, die sich nicht so gut in Wasser lösen, z.B. Acrylnitril, Methacrylnitril oder Methacrylsäurebutylester, werden daher maximal in einer solchen Menge bei der Polymerisation eingesetzt, wie es ihrer Löslichkeit in Wasser oder in der wäßrigen Monomerlösung entspricht. Vorzugsweise stellt man in der ersten Stufe des erfindungsgemäßen Verfahrens zunächst Wasser-in-Öl-Polymeremulsionen von Homopolymerisaten des N-Vinylformamids her oder Copolymerisate aus

(a) 95 bis 10 Mol-% N-Vinylformamid und

(b) 5 bis 90 Mol-% eines ethylenisch ungesättigten Monomeren aus der Gruppe Vinylacetat, Vinylpropionat, der $C_1$- bis $C_4$-Alkylvinylether, N-Vinylpyrrolidon, der Ester, Nitrile und Amide von Acrylsäure und Methacrylsäure.

Die Copolymerisate sollen mindestens 10 Mol-% N-Vinylformamid einpolymerisiert enthalten.

Bei der Copolymerisation kann man gegebenenfalls auch eine weitere Gruppe von Monomeren (c) mitverwenden, die sich in Wasser lösen und mindestens 2-ethylenisch ungesättigte Verbindungen im Molekül aufweisen. Hierbei handelt es sich um sogenannte Vernetzer, wie beispielsweise Methylen-bis-acrylamid, N,N'-Divinylethylenharnstoff, N,N'-Divinylpropylenharnstoff, Ethyliden-bis-3-vinylpyrrolidon sowie Acrylsäure-, Methacrylsäure- und Maleinsäureester von 2- oder mehrwertigen Alkoholen, z.B. Ethylenglykoldiacrylat und Ethylenglykoldiacrylat und Ethylenglykoldimethacrylat. Weitere geeignete Ester dieser Art erhält man beispielsweise bei der Veresterung von mehrwertigen Alkoholen, z.B. Glycerin, Pentaerythrit, Glucose, Fructose, Sucrose, Polyalkylenglykolen eines Molekulargewichts von 400 bis 2000, Polyglycerinen eines Molekulargewichts von 126 bis 368 mit Acrylsäure, Methacrylsäure oder Maleinsäure, wobei man pro Mol des eingesetzten Alkohols mindestens 2 Mole einer der genannten Carbonsäuren oder auch eine Mischung der genannten Carbonsäuren einsetzt. Sofern wasserlösliche Vernetzer bei der Polymerisation der N-Vinylamide allein oder in Mischung mit anderend wasserlöslichen Monomeren eingesetzt werden, beträgt der Anteil an Vernetzern, bezogen auf die gesamte Monomermischung, 100 bis 20000, vorzugsweise 100 bis 10000 ppm.

Man stellt zunächst eine wäßrige Monomerlösung her, die einen pH-Wert von 4 bis 9, vorzugsweise 5 bis 8 aufweist. In vielen Fällen empfiehlt es sich, zusätzlich noch in Gegenwart von Puffern zu arbeiten, z.B. zur wäßrigen Phase primäres oder sekundäres Natriumphosphat zuzusetzen. Die Konzentration der Monomeren in der wäßrigen Lösung beträgt 5 bis 60, vorzugsweise 10 bis 50 Gew.-%.

Die wäßrige Monomerphase wird in einem hydrophoben organischen Dispersionsmedium emulgiert. Geeignete organische, mit Wasser praktisch nicht mischbare Flüssigkeiten sind geradkettige und verzweigte aliphatische Kohlenwasserstoffe, wie Pentan, Hexan, Octan, Isooctan, Decan, Dodecan, Paraffinöle und flüssige gesättigte Kohlenwasserstoffmischungen, deren Siedepunkte bei Normaldruck (1013 mbar) in dem Bereich von 120 bis 350 °C liegen. Außer geradkettigen und verzweigten aliphatischen Kohlenwasserstoffen können auch gesättigte cyclische Kohlenwasserstoffe verwendet werden, wie Cyclohexan, Methylcyclohexan, Dimethylcyclohexan, Ethylcyclohexan, Cyclopentan, Cyclopentan, Cycloheptan und Cyclooctan. Ebenso ist es möglich, Mischungen aus den genannten Kohlenwasserstoffen einzusetzen, wie sie üblicherweise in Benzinschnitten vorliegen. Solche Mischungen können auch aromatische Kohlenwasserstoffe enthalten. Genauso gut ist es möglich als hydrophobes organisches Dispersionsmedium reine aromatische Kohlenwasserstoffe einzusetzen, wie Toluol, Xylole, Ethylbenzol, Cumol und Benzol sowie chlorierte Kohlenwasserstoffe, wie Perchlorethylen, Tetrachlorethylen, 1,1,1-Trichlorethan und Tetrachlorkohlenstoff. Vorzugsweise verwendet man Gemische aus gesättigten Kohlenwasserstoffen, die bis zu 20 Gew.-% Naphthene enthalten. Die gesättigten Kohlenwasserstoffe, bestehen dabei hauptsächlich aus n- und i-Paraffinen. Die Siedegrenzen solcher Kohlenwasserstoffmischungen betragen bei 1013 mbar 150 bis 260 °C (bestimmt nach ASTMD 1078/86). Der Anteil der Ölphase am Aufbau der Wasser-in-Öl-Polymeremulsion beträgt 10 bis 70, vorzugsweise 20 bis 50 Gew.-%.

Die Polymerisation der Monomeren erfolgt in Gegenwart von unter Polymerisationsbedingungen Radikale bildender Initiatoren, z.B. in Gegenwart von Peroxiden, Hydroperoxiden, Wasserstoffperoxid, Azoverbindungen oder sogenannter Redoxkatalysatoren. Als radikalische Initiatoren sind alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens 2 bei verschiedenen Temperaturen zerfallenden Initiatoren zu arbeiten, nämlich zunächst einen bereits bei niedrigerer Temperatur zerfallenen Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche oder Mischungen von wasserlöslichen und wasserunlöslichen Initiatoren einsetzen. Die in Nasser unlöslichen Initiatoren sind dann in der organischen Phase löslich. Für die im folgenden angegebenen Temperaturbereiche kann man beispielsweise die dafür aufgeführten Initiatoren verwenden.

Temperatur: 40 bis 60 °C:

Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis(2-methyl-N-phenylpropionamidin)dihydrochlorid, 2,2'-Azobis(2-methylpropionamidin)dihydrochlorid

Temperatur: 60 bis 80 °C:

Tert.-Butylperpivalat, Dioctanoylperoxid, Dilauroylperoxid, 2,2'-Azobis(2,4-dimethylvaleronitril)

Temperatur: 80 bis 100 °C:
Dibenzoylperoxid, tert.-Butylper-2-ethylhexanoat, tert.-Butypermaleinat, 2,2-Azobis-(isobutyronitril), Dimethyl-2,2'-azobisisobutyrat
Temperatur: 100 bis 120 °C:
Bis-(ert.-butylperoxid)-cyclohexan, tert.-Butylperoxiisopropylcarbonat, tert.-Butylperacetat
Temperatur: 120 °C bis 140 °C:
2,2-Bis-(tert.-butylperoxi)-butan, Dicumylperoxid, di-tert.-amylperoxid, Di-tert.-butylperoxid
Temperatur: >140 °C:
p-Menthanhydroperoxid, Pinanhydroperoxid, Cumolhydroperoxid, tert.-Butylhydroperoxid
Verwendet man zusätzlich noch Salze von Schwermetallen, z.B. Kupfer-, Kobalt-, Mangan-, Eisen-, Nickel- und Chromsalze oder organische Verbindungen wie Benzoin, Dimethylanilin, Ascorbinsäure zusammen mit mindestens einem der oben angegebenen Initiatoren, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100 °C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 100 bis 10000, vorzugsweise 100 bis 2000 ppm eines Polymerisationsinitiators oder einer Mischung mehrerer Polymerisationsinitiatoren.

Die Polymerisation kann gegebenenfalls in Gegenwart von Reglern durchgeführt werden. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan, außerdem Allylverbindungen, wie Allylalkohol, Aldehyde, wie Acetaldehyd, Propionaldehyd, n-Butyraldehyd und iso-Butyraldehyd sowie Ameisensäure. Falls die Polymerisation in Gegenwart von Reglern durchgeführt wird, benötigt man davon 0,05 bis 5 Gew.-%, bezogen auf die bei der Polymerisation eingesetzten Monomeren.

Die Wasser-in-Öl-Polymerisation erfolgt nachdem aus der US-PS 3 284 393 bekannten Verfahren. Die wäßrige Monomerlösung wird dazu in dem Kohlenwasserstofföl emulgiert. Um eine stabile Monomer-Emulsion zu erhalten, ist es erforderlich, daß man das Emulgieren der wäßrigen Monomerlösung in dem Kohlenwasserstofföl in Gegenwart von Wasser-in-Öl-Emulgatoren vornimmt. Solche Produkte haben einen HLB-Wert von 2 bis 8. Zur Definition des HLB-Werts vgl. W.C. Griffin, J. Soc. Cosmetic Chem. Vol. 5, 249 (1954). Geeignete Wasser-in-Öl-Emulgatoren sind beispielsweise Sorbitanmonolaurat, Sorbitanmonopalmitat, Sorbitanmonostearat, Sorbitanmonooleat, Glycerinmonooleat, Glycerin-Sorbitan-Fettsäureester, Ethoxylierungsprodukte von Glycerin-Sorbitan-Fettsäureestern sowie Mannitmonooleat. Mit Hilfe der genannten Wasser-in-Öl-Emulgatoren lassen sich mehr oder weniger stabile Wasser-in-Öl-Polymeremulsionen herstellen. Die Polymerisation kann gegebenenfalls auch zusätzlich in Gegenwart von Netzmitteln durchgeführt werden, so daß man Wasser-in-Öl-Polymeremulsionen erhält, die beim Eingießen in Wasser selbst invertierend sind. Die Netzmittel haben bekanntlich HLB-Werte von mehr als 8, vorzugsweise in dem Bereich von 9 bis 20. Die Verwendung von Netzmitteln zum Invertieren von Wasser-in-Öl-Polymeremulsionen beim Eingießen in Nasser, um das Polymerisat rasch in Lösung zu bringen, ist beispielsweise aus der US-PS 3 624 019 bekannt.

In einer bevorzugten Ausführungsform des erfindungsgemäßen Verfahrens verwendet man bereits bei der Herstellung der Wasser-in-Öl-Emulsionen solche Emulgatoren, die erhältlich sind durch Umsetzung von

(A) $C_{10}$- bis $C_{22}$-Fettalkoholen mit Epichlorhydrin im Molverhältnis 1 : 0,5 bis 1 : 1,5 zu Glycidylethern,

(B) Reaktion der Glycidylether mit (1) gesättigten, 2 bis 6 OH-Gruppen enthaltenden $C_2$- bis $C_6$-Alkoholen oder (2) deren Monoether mit $C_{10}$-bis $C_{22}$-Fettalkoholen, im Molverhältnis Glycidylether zu (1) oder (2) von 1 : 0,5 bis 6 in Gegenwart von Säuren oder Basen und

(c) Alkoxylierung der Reaktionsprodukte gemäß (B) mit mindestens einem $C_2$- bis $C_4$-Alkylenoxid im Molverhältnis 1 : 1 bis 6.

Emulgatoren dieser Art sind beispielsweise aus der oben angegebenen GB-PS 1 562 417 bekannt. Zur Herstellung dieser Emulgatoren setzt man in der Verfahrensstufe (A) einen $C_{10}$- bis $C_{22}$-Fettalkohol mit Epichlorhydrin in dem angegebenen Molverhältnis zu Glycidylethern um. Geeignete Fettalkohole sind beispielsweise Oleylalkohol, Stearylalkohol, Cetylalkohol, Myristylalkohol, Laurylalkohol, Talgfettalkohol und die nach dem Oxoverfahren erhältlichen langkettigen Alkohole mit 10 bis 22 Kohlenstoffatomen.

In der Verfahrensstufe (B) werden die gemäß (A) erhaltenen Glycidylether mit gesättigten, 2 bis 6 OH-Gruppen enthaltenen $C_2$- bis $C_6$-Alkoholen umgesetzt. Geeignete mehrwertige Alkohole dieser Art sind beispielsweise Ethylenglykol, Diethylenglykol, Dipropylenglykol, Butandiol-1,4, Butan-1,2,4-triol, Glycerin, Trimethylolpropan, Sorbit, Neopentylglykol und Pentaerythrit. Die genannten mehrwertigen Alkohole können auch eine Ethergruppierung aufweisen, die sich von $C_{10}$- bis $C_{22}$-Fettalkoholen ableitet. Geeignete Fettalko-

hole dieser Art wurden oben unter (A) bereits erwähnt. Geeignete Monoether von gesättigten 2 bis 6 OH-Gruppen enthaltenden $C_2$- bis $C_6$-Alkoholen ist beispielsweise 1-Oleyloxipropan-2,3-diol und Stearyloxipropan-2,3-diol. Die Glycidylether werden mit den beiden unter (B) angegebenen Verbindungsklassen entweder allein oder in Mischung im Verhältnis Glycidylether zu mehrwertigen Alkoholen oder Monoether von mehrwertigen Alkoholen von 1 : 0,5 bis 6 in Gegenwart von Säuren oder Basen zur Reaktion gebracht.

Die so erhältlichen Umsetzungsprodukte werden dann in der Reaktionsstufe (C) alkoxyliert. Als Alkylenoxide kommen hierfür Ethylenoxid, Propylenoxid und Butylenoxide in Betracht. Vorzugsweise verwendet man Ethylenoxid. Die Anwendung von Mischungen aus Ethylenoxid und Propylenoxid, Ethylenoxid und Butylenoxid oder Ethylenoxid, Propylenoxid und Butylenoxid für die Alkoxylierung der Reaktionsprodukte (B) ist möglich. Bezogen auf 1 Mol der Verbindung gemäß (B) verwendet man 1 bis 6 Mol an Alkylenoxiden.

Für die Herstellung der Wasser-in-Öl-Polymeremulsionen von N-Vinylamiden verwendet man 1 bis 30 Gew.-%, bezogen auf die Monomeren, an Wasser-in-Öl-Emulgatoren, die oben beschrieben wurden. Die Polymerisation der Wasser-in-Öl-Monomeremulsion wird bei Temperaturen von 20 bis 150 °C durchgeführt. Die Polymerisation wird vorzugsweise bei Normaldruck durchgeführt, kann jedoch auch zur Einstellung der Temperatur unter vermindertem oder erhöhtem Druck vorgenommen werden. Während der Polymerisation wird für eine gute Durchmischung der Reaktionsteilnehmer gesorgt. Im technischen Betrieb bieten sich hierfür Rührkessel an, die mit einem Ankerrührer ausgestattet sind. Die Drehzahl des Rührers beträgt etwa 100 bis 400 Umdrehungen/Minute. Die Polymerisation wird vorzugsweise so geführt, daß die Monomeren praktisch vollständig polymerisieren. Gegebenenfalls kann sich an die Hauptpolymerisation eine Nachpolymerisation anschließen, bei der man zum Reaktionsgemisch beispielsweise noch weitere Mengen an Peroxid oder Azoverbindungen zusetzt. Man erhält auf diese Weise Wasser-in-Öl-Polymeremulsionen mit einem Polymergehalt von 10- bis 50 Gew.-%. Falls Wasser-in-Öl-Polymeremulsionen mit einem noch höheren Polymergehalt gewünscht sind, kann der Polymergehalt durch azeotropes Entfernen von Wasser und Kohlenwasserstofföl aufkonzentriert werden. Dadurch erhält man Wasser-in-Öl-Polymeremulsionen mit einem Polymerisatgehalt von bis zu 70 Gew.-%. Besonders stabile Wasser-in-Öl-Polymeremulsionen erhält man bei Einsatz von Emulgatoren, die durch Umsetzung gemäß den oben beschriebenen Verfahrensstufen (A), (B) und (C) erhältlich sind. Polymerisate der N-Vinylamide der Formel I sowie die Copolymerisate haben K-Werte von 20 bis 300, vorzugsweise 50 bis 280. Für die meisten Anwendungen sind K-Werte der Polymerisate von 100 bis 250 von besonderem Interesse. (Die K-Werte wurden nach H. Fikentscher an 0,1 %igen wäßrigen Lösungen gemessen, die erhältlich sind durch Auflösen von 5 g Kochsalz und 0,08 g des Anlagerungsprodukts von 10 Mol Ethylenoxid an 1 Mol Isononylphenol in 94,92 g destilliertem Wasser. Die Messungen wurden jeweils bei 25 °C durchgeführt).

In der zweiten Verfahrensstufe des erfindungsgemäßen Verfahrens erfolgt die Hydrolyse der in der ersten Stufe hergestellten Polymerisate. Die Polymerisate enthalten mindestens 10 Mol-% an charakteristischen Einheiten der Formel

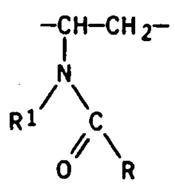

(II),

in der R, $R^1$ = H, $C_1$- bis $C_6$-Alkyl bedeuten, und die durch Hydrolyse in Einheiten der Formel

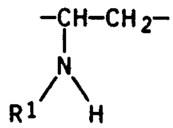

(III),

in der $R^1$ = H oder $C_1$- bis $C_6$-Alkyl ist, umgewandelt werden. In Abhängigkeit von der Reaktionsbedingungen bei der Hydrolyse, d.h. der Menge an Säure oder Base, bezogen auf das zu hydrolysierende Polymerisat, und der Reaktionstemperatur bei der Hydrolyse erhält man entweder eine partielle oder vollständige Hydrolyse der Einheiten der Formel (II). Die Hydrolyse der Polymerisate wird so weit geführt, daß 5 bis 100 % der in den Polymerisaten enthaltenen Monomereinheiten der Formel II, vorzugsweise 10 bis 90 % dieser Einheiten hydrolysiert sind. Um die Hydrolyse durchzuführen, ist es unerläßlich, daß die in

der ersten Verfahrensstufe hergestellten Wasser-in-Öl-Polymeremulsionen solche Emulgatoren enthalten, die durch Umsetzung der oben unter (A), (B) und (C) beschriebenen Verbindungen herstellbar sind. Diese Emulgatoren müssen zu 1 bis 30, vorzugsweise 2 bis 20 Gew.-%, bezogen auf die Polymerisate der Wasser-in-Öl-Polymeremulsion, anwesend sein, wenn die Hydrolyse der in den Polymerisaten enthaltenen Monomereinheiten (II) durchgeführt wird. In der bevorzugten Ausführungsform des erfindungsgemäßen Verfahrens werden diese Emulgatoren bereits bei der Herstellung der Wasser-in-Öl-Polymeremulsionen eingesetzt. Man kann diese Emulgatoren jedoch auch zu solchen Wasser-in-Öl-Emulsionen von N-Vinylamiden der Formel I zusetzen, die in Gegenwart anderer, üblicher Wasser-in-Öl-Emulgatoren hergestellt wurden. Die Hydrolyse erfolgt unter Reaktionsbedingungen, unter denen üblicherweise Wasser-in-Öl-Polymeremulsionen nicht beständig sind. Man gibt nämlich zur Hydrolyse eine Säure oder Base zu der in der ersten Verfahrensstufe hergestellten Wasser-in-Öl-Polymeremulsionen, die den durch Umsetzung von (A), (B) und (C) erhältlichen Emulgatoren aufweist oder zu der ebenfalls diesen Emulgator enthaltenen aufkonzentrierten Wasser-in-Öl-Polymeremulsionen zu. Für die Hydrolyse geeignete Säuren sind beispielsweise Mineralsäuren, wie Halogenwasserstoff (gasförmig oder in wäßriger Lösung), Schwefelsäure, Salpetersäure, Phosphorsäure (ortho-, metha-Polyphosphorsäure) und organische Säuren, z.B. $C_1$- bis $C_5$-Carbonsäuren, wie Ameisensäure, Essigsäure und Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man 0,05 bis 1,5 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Kalziumhydroxid, Strontiumhydroxid und Bariumhydroxid. Ebenso können aber auch Ammoniak und Alkylderivate des Ammoniaks verwendet werden, z.B. Alkyl- oder Arylamine z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge. Die Hydrolyse im sauren oder im alkalischen pH-Bereich erfolgt bei Temperaturen von 30 bis 170, vorzugsweise 50 bis 120 °C. Sie ist nach etwa 2 bis 8, vorzugsweise 3 bis 5 Stunden beendet. Nach diesen Reaktionszeiten erreicht man Hydrolysegrade der Einheiten der Formel II im Polymerisat von 5 bis 100 %, vorzugsweise 10 bis 90 %. Besonders bewährt hat sich eine Verfahrensweise, bei der zur Hydrolyse die Basen oder Säuren in wäßriger Lösung zugesetzt werden und bei der man durch azeotrope Destillation während der Hydrolyse die Polymerkonzentration der Wasser-in-Öl-Polymeremulsion in dem Bereich von 20 bis 50 % hält. Die hydrolysierte Wasser-in-Öl-Polymeremulsion kann auch nach Beendigung der Hydrolyse aufkonzentriert werden, z.B. auf Polymergehalte von 25 bis 70 Gew.-%, bezogen auf die gesamte Emulsion. Nach der Hydrolyse führt man im allgemeinen eine Neutralisation durch, so daß der pH-Wert der hydrolysierten Wasser-in-Öl-Polymeremulsion, 2 bis 8, vorzugsweise in dem Bereich von 3 bis 7 liegt. Die Neutralisation ist dann erforderlich, wenn ein Fortschreiten der Hydrolyse von teilweise hydrolysierten Polymerisaten vermieden werden soll. Die Viskosität der hydrolysierten Wasser-in-Öl-Polymerisate beträgt bei 20 °C 20 bis 10 000, bevorzugt 50 bis 5000 mPas. Diese Wasser-in-Öl-Polymeremulsionen können somit in einfacher Weise gehandhabt werden. Beispielsweise ist es möglich sie zu pumpen.

Für die Anwendung der Wasser-in-Öl-Emulsionen von hydrolysierten Polymerisaten ist es wünschenswert, daß diese Produkte beim Eingießen in Wasser rasch invertieren. Wie für Emulsionen dieses Typs aus der US-PS 3 624 019 bekannt ist, kann man sie dadurch invertierend einstellen, daß man 0,5 bis 10, vorzugsweise 1 bis 5 % eines Netzmittels zugibt, das einen HLB-Wert von mindestens 9 aufweist. Geeignete Tenside dieser Art sind beispielsweise die Anlagerungsprodukte von 8 bis 30 Mol Ethylenoxid an $C_8$- bis $C_{12}$-Alkylphenole oder die Anlagerungsprodukte von 5 bis 30 Mol Ethylenoxid an $C_{12}$- bis $C_{18}$-Alkohole oder $C_{10}$-/$C_{12}$-Alkylsulfonate. Wenn man netzmittelhaltige Wasser-in-Öl-Polymeremulsionen in Wasser eingießt, tritt eine Phasenumkehr ein und das in den Emulsionen enthaltene Polymere löst sich rasch in Wasser auf.

Die erfindungsgemäß hergestellten Wasser-in-Öl-Emulsionen von hydrolysierten N-Vinylformamidpolymerisaten werden beispielsweise als Flockungsmittel zur Klärung von Papiermaschinenabwässern, als Entwässerungs- und Retentionsmittel bei der Herstellung von Papier, als Dispergiermittel und Schutzkolloid für Bohrschlämme, als Hilfsmittel bei der Sekundärförderung und Tertiärforderung von Erdöl in Flutwässern, als Korrosionsschutzmittel und als Zementadditiv eingesetzt. Die schwach vernetzten Polymeren sind geeignet als Verdickungsmittel, beispielsweise für Textildruckpasten oder auch in Reinigerformulierungen. In allen Fällen benötigt man sehr verdünnte wäßrige Lösungen, die beim Anwender durch Invertieren von

netzmittelhaltigen Wasser-in-Öl-Polymeremulsionen von hydrolysierten N-Vinylamidpolymerisaten hergestellt werden. Die erfindungsgemäßen Wasser-in-Öl-Polymeremulsionen sind sedimentationsstabil.
Die K-Werte wurden bestimmt nach H. Fikentscher, Zellulosechemie, Band 13, 58-64 und 71-74 (1932); dabei bedeutet $K = k \cdot 10^3$. Die K-Werte der Copolymerisate wurden bei einer Polymerisatkonzentration von 0,1 Gew.-% in einer wäßrigen Salzlösung bestimmt, die durch Auflösen von 5 g Kochsalz und 0,08 g des Anlagerungsprodukts von 10 Mol Ethylenoxid an 1 Mol Isononylphenol in 94,92 g destilliertem Wasser hergestellt wurde. Die Messungen wurden bei 25 °C durchgeführt.

Der Feststoffgehalt der Wasser-in-Öl-Polymeremulsionen wurde dadurch bestimmt, daß man 30 g der Emulsion mit 10 g eines Kohlenwasserstoffgemisches vom Siedebereich 192 bis 254 °C verdünnte und diese Mischung in 900 ml Aceton einrührte. Dabei fiel das Polymere aus. Es wurde quantitativ abfiltriert, der Rückstand mit 500 ml Aceton aufgenommen und erneut abfiltriert. Anschließend trocknete man den Filterrückstand 15 Stunden lang bei 50 °C im Vacuum und wog ihn dann aus. Die Berechnung erfolgte dann nach der Formel:

$$\text{Feststoffgehalt in \%} = \frac{\text{Auswaage x 100}}{30}$$

Die Prozentangaben in den Beispielen beziehen sich, falls nichts anderes angegeben wurde, auf das Gewicht. In den Beispielen wurden die erfindungsgemäß einzusetzenden Emulgatoren 1 oder 2 verwendet. Sie wurden folgendermaßen hergestellt:

Emulgator 1

Umsetzung von (A) Oleylalkohol mit Epichlorhydrin im Molverhältnis 1 : 1 zu Oleylglycidylether, (B) Reaktion des Oleylglycidylethers mit Glycerin im Molverhältnis 1 : 1 in Gegenwart von $BF_3$-Phosphorsäure bei einer Temperatur von 80 °C und Entfernen des Katalysators mit Hilfe eines basischen Ionenaustauschers und (C) Ethoxylierung des Reaktionsprodukts gemäß (B) mit 2 Mol Ethylenoxyd.

Emulgator 2

Die Verfahrensstufen (A) und (B) werden wie bei der Herstellung des Emulgators 1 analog durchgeführt, jedoch erfolgt die Alkoxylierung des in der Verfahrensstufe (B) erhaltenen Produkts mit 1 Mol Ethylenoxid.

Beispiel 1

In einem 2 l fassenden Polymerisationsbehälter, der mit Ankerrührer, Rückflußkühler, Thermometer, Stickstoffeinlaß- und -auslaß versehen ist, werden unter Rühren in der angegebenen Reihenfolge folgende Substanzen vorgelegt:
290 g eines Kohlenwasserstoffgemisches vom Siedebereich 192 bis 254 °C, 30,25 g Emulgator 1, 190,5 g frisch destilliertes N-Vinylformamid und eine Lösung von 3,8 g primärem Natriumphosphat in 371 g destilliertem Wasser. Der pH-Wert der Mischung beträgt 6,5. Der Behälterinhalt wird nun 30 Minuten bei einer Rührgeschwindigkeit von 400 Upm unter einer Stickstoffatmosphäre emulgiert. Anschließend wird die Mischung bei einer Rührerdrehzahl von 400 Upm erhitzt. Nach Erreichen einer Temperatur von 40 °C fügt man 0,285 g 2,2'-Azo-bis-(2,4-dimethylvaleronitril) in 5 g Aceton gelöst zu und erhitzt die Mischung auf eine Temperatur von 60 °C. Man hält die Temperatur 2 Stunden bei 60 bis 65 °C und gibt dann eine Lösung von 0,055 g 2,2'-Azo-bis-(2,4-dimethylvaleronitril) in 3 g Aceton gelöst zu und erhitzt das Reaktionsgemisch danach noch 2 Stunden auf 75 °C. Nach dieser Zeit liegt eine dünne, stippen- und koagulatfreie Emulsion vor, mit einem Feststoffgehalt von 21,7 %, die auf 50 °C abgekühlt und in die zur Hydrolyse des Poly-N-Vinylformamids innerhalb von 0,5 Stunden 34,3 g Chlorwasserstoff (gasförmig) eingeleitet werden. Die Hydrolyse wird nach einer Dauer von 5 Stunden bei 50 °C abgebrochen. Nach dieser Zeit sind 30 % der Formamidgruppen des Homopolymerisats des N-Vinylformamids in Amingruppen umgesetzt. Die Reaktionsmischung wird anschließend auf 20 °C abgekühlt und durch Einleiten von gasförmigem Ammoniak auf einen pH-Wert von 5 eingestellt. Dann gibt man innerhalb einer halben Stunde unter intensivem Rühren 30 g des Anlagerungsprodukts von 10 Mol Ethylenoxid an 1 Mol Isononylphenol zu und rührt die Mischung noch 2 Stunden. Man erhält auf diese Weise eine stabile Wasser-in-Öl-Emulsion eines zu 30 % hydrolysierten Poly-N-vinylformamids. Diese Emulsion ist dünn und glatt sowie stippen- und koagulatfrei. Der K-Wert

des Polymerisats vor der Hydrolyse betrug 196, die Viskosität betrug 800 mPas. Die tensidfreie sowie die tensidhaltige Wasser-in-Öl-Polymeremulsion ist lagerstabil. Die tensidhaltige invertiert beim Eingießen in Wasser, wobei sich das Polymerisat in Wasser rasch auflöst.

Beispiel 2

Beispiel 1 wird mit der einzigen Ausnahme wiederholt, daß die selbe Menge des Emulgators 2 eingesetzt wird. Man erhält eine Wasser-in-Öl-Polymeremulsion, dessen Polymerisat einen K-Wert von 192 hat. Die Emulsion sieht dünn und glatt aus und besitzt einen Feststoffgehalt von 21,5 %. Sie ist stippen- und koagulatfrei. Die tensidfrele sowie tensidhaltige (Zusatz von 30 g des Anlagerungsprodukts von 10 Mol Ethylenoxid an 1 Mol Isononylphenol) Wasser-in-Öl-Polymeremulsion ist lagerstabil und hat eine Viskosität von 390 mPas (tensidfrei) und 1600 mPas (tensidhaltig). Die tensidhaltige Wasser-in-Öl-Polymeremulsion ist beim Verdünnen mit Wasser rasch invertiert, wobei sich das Polymerisat auflöste.

Vergleichsbeispiele 1 bis 8

Zum Vergleich mit dem Stand der Technik, wie er sich beispielsweise aus der EP-A-0264649 ergibt, wurde das Beispiel 1 mit den in der Tabelle 1 angegebenen Emulgatoren wiederholt. Soweit die dabei erhaltenen Emulsionen koagulat- und stippenfrei waren (Vergleichsbeispiele 4 und 5), wurde die Hydrolyse wie im Beispiel 1 beschrieben durchgeführt. Die Ergebnisse und die bei den einzelnen Vergleichsbeispielen jeweils eingesetzten Emulgatoren sind in Tabelle 1 angegeben.

Tabelle 1

| Vergleichs-beispiel Nr. | Emulgator | HLB-Wert des Emulgators | Erscheinungsbild der Wasser-in-Öl-Polymerisate: direkt nach der Polymerisation | Erscheinungsbild der Wasser-in-Öl-Polymerisate: nach der Hydrolyse |
|---|---|---|---|---|
| 1 | Sorbitan-Monolaurat (Span 20⁺) | 8,6 | starker Wandbelag Emulsion inhomogen | - |
| 2 | Sorbitan-Monopalmitat (Span 40⁺) | 6,7 | viskose Emulsion mit viel Koagulat | - |
| 3 | Sorbitan-Monostearat (Span 60⁺) | 4,7 | viskose Emulsion mit viel Koagulat | - |
| 4 | Sorbitan-Monooleat (Span 80⁺) | 4,3 | dünne, praktisch stippenfreie Emulsion | koaguliert |
| 5 | Glyzerin-Monooleat (Arlacel 186⁺) | 2,8 | dünne Emulsion mit wenig Stippen | koaguliert |
| 6 | Glyzerin-Sorbitan-Fettsäureester unges. (Arlacel 481⁺) | 4,5 | stark stippige Emulsion | - |
| 7 | handelsübliches Additionsprodukt von Ethylenoxid an Glyzerin-Sorbitan-Fettsäureester (Arlacel 988⁺) | 4,7 | stark stippige Emulsion | - |
| 8 | Mannit-Monooleat (Arlacel A⁺) | 4,3 | stark stippige Emulsion | - |

⁺ Handelsprodukte der Firma Atlas Chemie

Beispiel 3

In der in Beispiel 1 beschriebenen Polymerisationsapparatur werden 540 g n-Octan und 15 g Emulgator 1 vorgelegt und bei einer Rührerdrehzahl von 400 Upm unter einem schwachen Stickstoffstrom auf eine

Temperatur von 50 °C erhitzt. Dann fügt man 0,3 g 2,2'-Azo-bis(2,4-dimethylvaleronitril) zu und innerhalb von 20 Minuten eine Lösung von 90 g N-Vinylformamid in 180 g Wasser. Die Reaktionsmischung wird anschließend noch 2 Stunden und 40 Minuten bei 50 °C gerührt. Man entnimmt eine Probe und bestimmt den K-Wert des Polymerisats. Er beträgt zu diesem Zeitpunkt 208. der Feststoffgehalt der Wasser-in-Öl-Emulsion beträgt 10,9 %.

Zu der so erhaltenen Wasser-in-Öl-Polymeremulsion fügt man innerhalb von 30 Minuten 42,9 g einer 38 %igen wäßrigen Salzsäure zu und erhitzt das Reaktionsgemisch zur Hydrolyse 5 Stunden auf 50 °C. Nach dieser Zeit sind 30 % der Formamidgruppen hydrolysiert. Es liegt eine sehr dünne, stippenfreie Wasser-in-Öl-Polymeremulsion vor, die beim Stehen über Nacht zwar schwach absetzt, jedoch durch leichtes Bewegen oder Umrühren wieder homogen wird. Der Zusatz von 15 g eines Anlagerungsprodukts von 10 Mol Ethylenoxid an 1 Mol Isononylphenol führt zu einer lagerstabilen Wasser-in-Öl-Emulsion eines hydrolysierten Poly-N-vinylformamids. Diese Emulsion ist beim Eingießen in Wasser direkt invertierbar.

Vergleichsbeispiel 9

Das Beispiel 3 wurde mit 15 g Sorbitanmonostearat (Span 60) anstelle von 15 g Emulgator 1 wiederholt. Dann wurde die erhaltene Wasser-in-Öl-Polymeremulsion durch Zusatz von wäßriger Salzsäure, wie im Beispiel 3 beschrieben, hydrolysiert. Nach der Hydrolyse trat eine völlige Sedimentation des Polymeren ein. Der sedimentierte Anteil ließ sich auch selbst durch intensives Rühren nicht mehr emulgieren.

Beispiel 4

In der im Beispiel 1 beschriebenen Polymerisationsapparatur werden folgende Stoffe vorgelegt: 270,75 g eines Kohlenwasserstoffgemischs vom Siedebereich 192 bis 254 °C, 33 g Emulgator 1, 285,75 g N-Vinylformamid und eine Lösung von 5 g primärem Natriumphosphat in 491 g destilliertem Wasser. Der pH-Wert der Mischung beträgt 6,7. Der Inhalt des Polymerisationsbehälters wird nun unter einer Stickstoffatmosphäre 30 Minuten bei einer Rührerdrehzahl von 400 Upm gerührt und dadurch emulgiert sowie erhitzt. Sobald das Reaktionsgemisch eine Temperatur von 40 °C erreicht hat, fügt man eine Mischung von 0,427 g 2,2'-Azo-bis(2,4-dimethylvaleronitril) und 0,142 g 2,2'-Azo-bis-isobutyronitril in 10 ml eines Kohlenwasserstoffgemisches zu und hält die Temperatur des Reaktionsgemisches danach 2 Stunden in dem Bereich von 60 bis 65 °C. Danach rührt man das Reaktionsgemisch noch 2 Stunden bei einer Rührerdrehzahl von 400 Upm und einer Temperatur von 75 °C. Man kühlt es dann auf 50 °C ab. Der K-Wert des Polymeren der Wasser-in-Öl-Polymeremulsion beträgt 221. Der Feststoffgehalt der Wasser-in-Öl-Emulsion des Polymeren beträgt 26,1 %.

Zur Hydrolyse leitet man innerhalb von 30 Minuten unter ständigem Rühren 52,3 g gasförmigen Chlorwasserstoff ein und hält das Reaktionsgemisch noch 5 Stunden bei 50 °C. Unter diesen Bedingungen hydrolysieren 30 % der Formamidgruppen des Polymerisats. Das Reaktionsgemisch wird auf eine Temperatur von 20 °C abgekühlt und durch Einleiten von gasförmigem Ammoniak auf einen pH-Wert von 5 eingestellt.

Um die so erhaltene Wasser-in-Öl-Emulsion eines hydrolysierten Poly-N-vinylformamids, das 30 % N-Vinylamineinheiten enthält, selbstinvertierend einzustellen, fügt man innerhalb von 30 Minuten unter Rühren mit einer Rührerdrehzahl von 400 Upm 30 g eines Anlagerungsproduktes von 12 Mol Ethylenoxid und 6 Mol Propylenoxid an einen $C_{13}/C_{15}$-Oxoalkohol zu und rührt das Reaktionsgemisch noch 2 Stunden nach beendeter Zugabe. Man erhält auf diese Weise eine leicht viskose, stippenfreie Emulsion, die problemlos mit Wasser unter rascher Auflösung des Polymerisats verdünnt werden kann.

Beispiele 5 bis 7

Beispiel 1 wird zunächst wiederholt. Unmittelbar nach der Polymerisation teilt man die erhaltene Wasser-in-Öl-Emulsion von Poly-N-vinylformamid in 3 Teile und gibt jeweils zur Hydrolyse unterschiedliche Mengen an Säure zu. Die in den Beispielen jeweils angewandten Mengen sind in Tabelle 2 angegeben. Wie daraus ersichtlich ist, führt eine höhere Säuremenge zu einem höheren Hydrolysegrad. Die Emulsionen werden nach der Hydrolyse jeweils durch Zugabe des Anlagerungsprodukts von 10 Mol Ethylenoxid an 1 Mol Isononylphenol selbstinvertierend eingestellt. Das Aussehen dieser Emulsionen ist in Tabelle 2 ebenfalls angegeben.

Tabelle 2

| Beispiel Nr. | HCl-Gasmenge Menge [g] | Hydrolysegrad [%] | Aussehen der W/O-Polymeremulsion |
|---|---|---|---|
| 5 | 5,2 | 10 | dünn, stippenfrei |
| 6 | 22,8 | 60 | dünn, stippenfrei |
| 7 | 39,0 | 90 | dünn, stippenfrei |

Beispiele 8 bis 12

Das Beispiel 1 wird mit den Ausnahmen wiederholt, daß man bei den folgenden Beispielen jeweils anstelle des reinen N-Vinylformamids Mischungen aus N-Vinylformamid mit den in Tabelle 3 angegebenen Comonomeren einsetzt. Die Gesamtmenge an Monomeren betrug bei jedem dieser Beispiele 190,5 g. Die bei der Hydrolyse eingesetzten Mengen an gasförmigem Chlorwasserstoff sind in der Tabelle 3 ebenfalls angegeben.

Tabelle 3

| Beispiel Nr. | Monomerenverhältnis Gew.-% | HCl-Menge | K-Wert (nicht hydrolysiert) | Aussehen der Emulsion |
|---|---|---|---|---|
| 8 | 40 VFA/60 AM | 78 g | 248 | dünn, stippenfrei |
| 9 | 50 VFA/50 VP | 34,1 g | 178 | dünn, stippenfrei |
| 10 | 50 VFA/50 AMPS | 34,1 | 228 | dünn, stippenfrei |
| 11 | 80 VFA/20 VAc | 35,1 | 178 | dünn, stippenfrei |
| 12 | 60 VFA/40 HPA | 34,1 | 194 | dünn, stippenfrei |

VFA = N-Vinylformamid
AM = Acrylamid
VP = N-Vinylpyrrolidon
VAc = Vinylacetat
HPA = Hydroxipropylacrylat
AMPS = Acrylamidomethanpropansulfonsäure

Beispiel 13

In dem in Beispiel 1 beschriebenen Reaktor wurden 290 g eines Kohlenwasserstoff-Gemisches vom Siedepunkt 192 bis 254 °C, 30, 25 g Emulgator 1, 190,5 g N-Vinylformamid und eine Lösung von 1,9 g primärem Natriumphosphot in 372 g destilliertem Wasser vorgelegt. Der pH-Wert der Mischung betrug 6,3. Das Reaktionsgemisch wird bei einer Rührerdrehzahl von 400 Upm erhitzt. Sobald die Mischung eine Temperatur von 40 °C erreicht hat, fügt man 0,285 g tert.-Butylperpivalat und 0,14 g tert.-Butylperoctoat zu und erhitzt die Reaktionsmischung dann auf 60 °C. Das Reaktionsgemisch wird 2 Stunden bei 60 bis 65 °C und anschließend noch 2 Stunden bei 80 °C unter Rühren erwärmt. Dann kühlt man die Mischung auf 50 °C ab. Das Polymerisat der Wasser-in-Öl-Polymeremulsion hat einen K-Wert von 240.

Zur Hydrolyse des Polymerisates der Wasser-in-Öl-Polymeremulsion leitet man innerhalb von 0,5 Stunden 34,3 g gasförmigen Chlorwasserstoff ein und hält das Reaktionsgemisch anschließend noch 5 Stunden bei einer Temperatur von 50 °C. Danach wird es azeotrop entwässert, wobei der Polymerisatgehalt von ursprünglich 21 % auf 33 % erhöht wird. In einer Zwischenphase, bei einem Feststoffgehalt von 25 bis etwa 27 % wird die Emulsion klar und völlig durchsichtig. Die gebildete Emulsion mit einem Polymergehalt von 33 % ist dünn und stippenfrei und läßt sich problemlos durch Zusatz des Anlagerungsprodukts von 10 Mol Ethylenoxid an 1 Mol Isononylphenol zu einer in Wasser selbstinvertierbaren stabilen Emulsion verarbeiten.

Beispiele 14 bis 18

Die im Beispiel 1 beschriebe Wasser-in-Öl-Polymeremulsion wird auf unterschiedliche Weise hydrolysiert. Das verwendete Hydrolysemittel, sowie die Reaktionsbedingungen bei der Hydrolyse sind in Tabelle 4 angegeben.

Tabelle 4

| Beispiel Nr. | Hydrolysemittel | Temp. [°C] | Nachreaktionszeit [Std.] | Aussehen der Emulsion |
|---|---|---|---|---|
| 14 | 77,7 g Schwefelsäure 50 %ig | 60 | 4 | dünn, stippenfrei |
| 15 | 55,5 g Schwefelsäure 70 %ig | 60 | 4 | dünn, stippenfrei |
| 16 | 45,6 g Ammoniak[1)] (als Gas) | 100 | 5 | dünn, stippenfrei |
| 17 | 200 g Kalilauge 30 %ig | 50 | 2,5 | dünn, stippenfrei |
| 18 | 142,9 g Natronlauge 30 %ig | 50 | 2,5 | dünn, stippenfrei |

[1)] Die Hydrolyse erfolgte in einem Autoklaven unter Druck.

Nach der Hydrolyse gab man zu jedem Ansatz 30 g des Anlagerungsproduktes von 10 Mol Ethylenoxid an 1 Mol Isononylphenol zu und erhielt eine in Wasser selbstinvertierbare Wasser-in-Öl-Polymeremulslon.

Beispiel 19

Beispiel 1 wurde mit der Ausnahme wiederholt, daß man zur Monomerphase 1,9 g Ameisensäure als Polymerisationsregler zusetzte. Der Feststoffgehalt der Wasser-in-Öl-Emulsion beträgt 21,5 %. Der K-Wert des Polymerisats vor der Hydrolyse betrug 148. Die Wasser-in-Öl-Polymeremulsion des hydrolysierten Polymerisats war dünn und stippenfrei.

Beispiel 20

Man verfährt wie bei Beispiel 1, gibt jedoch zur wäßrigen Monomerphase noch 0,935 g Methylen-bis-acrylamid zu. Der Feststoffgehalt der Wasser-in-Öl-Emulsion beträgt 21,8 %. Man erhält eine dünne und stippenfreie Wasser-in-Öl-Emulsion eines hydrolysierten vernetzten Polymerisats.

Beispiel 21

Beispiel 1 wird wiederholt, jedoch verwendet man als hydrophobes organisches Dispersionsmedium Cyclohexan. Der Feststoffgehalt der Wasser-in-Öl-Emulsion beträgt 21,7 %. Man erhält auf diese Weise ein Polymerisat mit einem K-Wert von 200 vor der Hydrolyse und nach der Hydrolyse eine schwach-viskose stippenfreie Wasser-in-Öl-Polymeremulsion eines partiell hydrolysierten Polymerisats.

Beispiel 22

Beispiel 1 wird mit der Ausnahme wiederholt, daß man als hydrophobes organisches Dispersionsmedium eine Mischung aus 50 % Cyclohexan und 50 % eines Kohlenwasserstoffgemisches vom Siedepunkt 192 bis 254°C einsetzte. Es resultierte ein Polymerisat mit einem K-Wert von 193 vor der Hydrolyse. Nach der Hydrolyse lag eine schwach-viskose stippenfreie Wasser-in-Öl-Emulsion eines zu 30 % hydrolysierten Poly-N-vinylformamids vor.

Beispiel 23

In der in Beispiel 1 beschriebenen Polymerisationsapparatur werden folgende Stoffe vorgelegt.
270,75 g eines Kohlenwasserstoffgemisches vom Siedebereich 192 bis 154°C, 33 g Sorbitanmonostearat (Span 60), 285,75 g N-Vinylformamid und eine Lösung von 5 g primären Natriumphosphat in 491 g destilliertem Wasser. Der pH-Wert der Mischung beträgt 6,6. Der Inhalt des Polymerisationsbehälters wird nun unter einer Stickstoffatmosphäre 30 Minuten bei einer Rührerdrehzahl von 400 Upm gerührt und dadurch emulgiert sowie erhitzt. Sobald das Reaktionsgemisch eine Temperatur von 40°C erreicht hat, fügt man eine Mischung von 0,427 g 2,2'-Azo-bis-(2,4-dimethylvaleronitril) und 0,142 g 2,2'-Azo-bis-isobutyronitril in 10 ml des Kohlenwasserstoffgemisches zu und hält die Temperatur des Reaktionsgemisches danach 2 Std. bei 60 bis 65 °C. Danach rührt man das Reaktionsgemisch noch 2 Std. bei einer Temperatur von 75 °C. Nun setzt man 15 g des Emulgators 1 zu und rührt noch 30 Minuten bei 75 °C. Man kühlt auf 50 °C ab. Der Feststoffgehalt der Wasser-in-Öl-Emulsion beträgt 26,8 % und der K-Wert des Polymeren beträgt 223.

Die Hydrolyse und der Zusatz des Tensids wird wie bei Beispiel 4 durchgeführt. Man erhält eine leicht viskose, stippenfreie Emulsion, die problemlos mit Wasser unter rascher Auflösung des Polymerisats verdünnt werden kann.

## Anwendungstechnische Beispiele

### Beispiel 24

Aus 48 Gew.-% TMP-Stoff, 33 % Zellstoff, 15 % gestrichenem Ausschuß und 4 % ungestrichenem Ausschuß wurde eine Pulpe mit einem Feststoffgehalt von 0,7 % hergestellt. Der pH-Wert der Pulpe betrug 7,6. Diese Pulpe wurde auf einer großtechnischen Papiermaschine unter Verwendung folgender Retentions- und Entwässerungshilfsmittel verarbeitet

(a) Wasser-in-Öl-Polymeremulsion gemäß Beispiel 1

(b) Handelsübliche, hochwirksame, Wasser-in-Öl-Emulsion eines Polymeren aus Acrylamid und Dimethylaminoethylacrylat. Die Wirksamkeit der beiden Produkte wurde anhand der Entwässerungszeit, der First-pass-Gesamtretention und der Füllstoffretention beurteilt. Folgende Ergebnisse wurden erhalten:

Tabelle 5

| Hilfsmittel | Dosierte Menge Polymer pro t produziertem Papier [g] | Entwässerungszeit für 300 ml Wasser [sec.] | first-pass-Gesamtretention [%] | Ascheretention [%] |
|---|---|---|---|---|
| (a) | 133 | 86 | 55,2 | 28,6 |
| (b) | 153 | 108 | 53,8 | 28,0 |

Der Versuch (a) ist ein Beispiel gemäß Erfindung und zeigt, daß gegenüber dem Vergleich (b) bereits mit einer geringeren Polymermenge bessere Effekte erzielbar sind.

### Beispiel 25

Man stellt eine Pulpe mit einem Feststoffgehalt von 0,9 % her aus 55 Gew.-% Holzschliff, 12 % Zellstoff und 33 % Kaolin. Durch Zusatz von Alaun wird ein pH-Wert von 5,0 eingestellt. Diese Pulpe wurde zur Herstellung von Papier auf einer großtechnischen Papiermaschine eingesetzt, wobei man als Retentions- und Entwässerungshilfsmittel

(a) gemäß Erfindung, die nach Beispiel 1 erhaltene Wasser-in-Öl-Polymer emulsion eines hydrolysierten Polymerisates und

(b) zum Vergleich mit dem Stand der Technik ein handelsübliches, hochwirksames Retentions- und Entwässerungshilfsmittel auf Basis eines vernetzten und Ethylenimin gepfropften Polyamidoamins einsetzte. Die Wirksamkeit der bei der Papierherstellung verwendeten Hilfsmittel (a) und (b) geht aus Tabelle 6 hervor.

Tabelle 6

| Hilfsmittel | Dosierte Menge Polymer pro t produziertem Papier [g] | first-pass-Gesamtretention [%] | Ascheretention [%] | Dampfverbrauch in t pro t produziertem Papier |
|---|---|---|---|---|
| (a) | 500 | 70 | 55,2 | 1,1 |
| (b) | 1000 | 58,8 | 43,0 | 1,2 |

Wie aus der Tabelle 6 ersichtlich ist, erreicht man mit dem erfindungsgemäß zu verwendenden Produkt bereits bei einer geringeren Einsatzmenge von Polymer bessere Effekte als mit dem Vergleichsprodukt (b).

## Patentansprüche

1. Verfahren zur Herstellung von stabilen Wasser-in-Öl-Emulsionen von hydrolysierten Polymerisaten von N-Vinylamiden der Formel

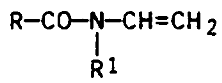

(I),

in der R,$R^1$ = H oder $C_1$- bis $C_6$-Alkyl bedeuten, durch Polymerisieren von Verbindungen der Formel I allein oder in Mischung mit anderen monoethylenisch ungesättigten Monomeren in Gegenwart von Polymerisationsinitiatoren und Emulgatoren in Form von Wasser-in-Öl-Emulsionen zu Wasser-in-Öl-Polymeremulsionen, die 10 bis 70 Gew.-% einer Ölphase und 10 bis 70 Gew.-% Polymerisat enthalten, das mindestens 10 Mol-% Vinylamideinheiten aufweist, und anschließende Hydrolyse der Polymerisate bei Temperaturen von 30 bis 170 °C, so daß 5 bis 100% der Vinylamideinheiten hydrolysiert sind und Wasser-in-Öl-Polymeremulsionen mit einer Viskosität von 20 bis 10 000 mPas (gemessen bei 20 °C) vorliegen, dadurch gekennzeichnet, daß man die Hydrolyse der Polymerisate in Form der Wasser-in-Öl-Polymeremulsionen in Gegenwart von Säuren oder Basen und 1 bis 30 Gew.-%, bezogen auf die Polymerisate, an Emulgatoren durchführt, die erhältlich sind durch Umsetzung von
   (A) $C_{10}$- bis $C_{22}$-Fettalkoholen mit Epichlorhydrin im Molverhältnis 1 : 0,5 bis 1 : 1,5 zu Glycidylethern,
   (B) Reaktion der Glycidylether mit (1) gesättigten, 2 bis 6 OH-Gruppen enthaltenden $C_2$- bis $C_6$-Alkoholen oder (2) deren Monoether mit $C_{10}$- bis $C_{22}$-Fettalkoholen, im Molverhältnis Glycidylether zu (1) oder (2) von 1 : 0,5 bis 6 in Gegenwart von Säuren oder Basen und
   (C) Alkoxylierung der Reaktionsprodukte gemäß (B) mit mindestens einem $C_2$- bis $C_4$-Alkylenoxid im Molverhältnis 1 : 1 bis 6.

2. Verfahren nach Anspruch 1, dadurch gekennzeichnet, daß man die Verbindungen der Formel I allein oder in Mischung mit anderen monoethylenisch ungesättigten Monomeren in Form einer Wasser-in-Öl-Emulsion in Gegenwart von Emulgatoren, die erhältlich sind durch Umsetzung von
   (A) $C_{10}$- bis $C_{22}$-Fettalkoholen mit Epichlorhydrin im Molverhältnis 1 : 0,5 bis 1 : 1,5 zu Glycidylethern,
   (B) Reaktion der Glycidylether mit (1) gesättigten, 2 bis 6 OH-Gruppen enthaltenden $C_2$- bis $C_6$-Alkoholen oder (2) deren Monoether mit $C_{10}$- bis $C_{22}$-Fettalkoholen im Molverhältnis Glycidylether zu (1) oder (2) von 1 : 0,5 bis 6 in Gegenwart von Säuren oder Basen und
   (C) Alkoxylierung der Reaktionsprodukte gemäß (B) mit mindestens einem $C_2$- bis $C_4$-Alkylenoxid im Molverhältnis 1 : 1 bis 6

   zu Wasser-in-Öl-Polymeremulsionen polymerisiert und anschließend zu der Wasser-in-Öl-Polymeremulsion eine Säure oder Base zusetzt, um die in den Polymeren einpolymerisiert enthaltenen Einheiten der Verbindungen der Formel I zu hydrolysieren.

3. Verfahren nach Anspruch 1 oder 2, dadurch gekennzeichnet, daß 5 bis 100 % der in den Polymerisaten einpolymerisiert enthaltenden Einheiten der Verbindungen der Formel I hydrolysiert sind.

4. Verfahren nach den Ansprüchen 1 bis 3, dadurch gekennzeichnet, daß als Verbindung der Formel I N-Vinylformamid eingesetzt wird.

5. Verfahren nach einem der Ansprüche 1 bis 3, dadurch gekennzeichnet, daß man Copolymerisate aus
   (a) 95 bis 10 Mol-% N-Vinylformamid mit
   (b) 5 bis 90 Mol-% eines ethylenisch ungesättigten Monomeren aus der Gruppe Vinylacetat, Vinylpropionat, der $C_1$- bis $C_4$-Alkylvinylether, N-Vinylpyrrolidon, der Ester, Nitrile und Amide von Acrylsäure und Methacrylsäure

   hydrolysiert.

**6.** Stabile Wasser-in-Öl-Emulsionen von hydrolysierten Polymerisaten von N-Vinylamiden erhältlich nach dem Verfahren der Ansprüche 1 bis 5.

**7.** Verwendung der nach den Ansprüchen 1 bis 5 erhältlichen Wasser-in-Öl-Emulsionen von hydrolysierten Poly-N-Vinylamiden als Entwässerungs-, Retentions- und Flockungsmittel bei der Herstellung von Papier und Papierprodukten.

## Claims

**1.** A process for the preparation of a stable water-in-oil emulsion of a hydrolyzed polymer of an N-vinylamide of the formula

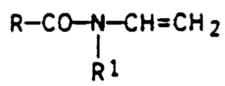 (I),

where R and $R^1$ are each H or $C_1$-$C_6$-alkyl, by polymerization of a compound of the formula I alone or as a mixture with other monoethylenically unsaturated monomers in the presence of polymerization initiators and emulsifiers, in the form of a water-in-oil emulsion, to give a water-in-oil polymer emulsion which contains from 10 to 70% by weight of an oil phase and from 10 to 70% by weight of a polymer which has at least 10 mol% of vinylamide units, and subsequent hydrolysis of the polymer at from 30 to 170 °C, so that from 5 to 100% of the vinylamide units are hydrolyzed and a water-in-oil polymer emulsion having a viscosity of from 20 to 10 000 mPa.s (measured at 20 °C) is present, which comprises hydrolyzing the polymer in the form of the water-in-oil polymer emulsion in the presence of an acid or base and of from 1 to 30% by weight, based on the polymer, of an emulsifier which is obtainable by

(A) reacting a $C_{10}$-$C_{22}$-fatty alcohol with epichlorohydrin in a molar ratio of from 1 : 0.5 to 1 : 1.5 to give a glycidyl ether,

(B) reacting the glycidyl ether with (1) a saturated $C_2$-$C_6$-alcohol containing from 2 to 6 OH groups or (2) its monoether with a $C_{10}$-$C_{22}$-fatty alcohol, in a molar ratio of glycidyl ether to (1) or (2) of from 1 : 0.5 to 1 : 6, in the presence of an acid or base, and

(C) alkoxylating the reaction product from (B) with one or more $C_2$-$C_4$-alkylene oxides in a molar ratio of from 1 : 1 to 1 : 6.

**2.** A process as claimed in claim 1, wherein the compound of the formula I, alone or as a mixture with other monoethylenically unsaturated monomers, in the form of a water-in-oil emulsion, is polymerized in the presence of an emulsifier which is obtainable by

(A) reacting a $C_{10}$-$C_{22}$-fatty alcohol with epichlorohydrin in a molar ratio of from 1 : 0.5 to 1 : 1.5 to give a glycidyl ether,

(B) reacting the glycidyl ether with (1) a saturated $C_2$-$C_6$-alcohol containing from 2 to 6 OH groups or (2) its monoether with a $C_{10}$-$C_{22}$-fatty alcohol, in a molar ratio of glycidyl ether to (1) or (2) of from 1 : 0.5 to 1 : 6, in the presence of an acid or base, and

(C) alkoxylating the reaction product from (B) with one or more $C_2$-$C_4$-alkylene oxides in a molar ratio of from 1 : 1 to 1 : 6

to give a water-in-oil polymer emulsion and then adding an acid or base to the water-in-oil polymer emulsion to hydrolyze the units of the compound of the formula I which are present as copolymerized units in the polymer.

**3.** A process as claimed in claim 1 or 2, wherein from 5 to 100% of the units of the compound of the formula I present as copolymerized units in the polymer are hydrolyzed.

**4.** A process as claimed in any of claims 1 to 3, wherein N-vinylformamide is used as the compound of the formula I.

**5.** A process as claimed in one of claims 1 to 3, wherein a copolymer of

(a) from 95 to 10 mol % of N-vinylformamide with

(b) from 5 to 90 mol % of an ethylenically unsaturated monomer from the group consisting of vinyl acetate, vinyl propionate, the $C_1$-$C_4$-alkyl vinyl ethers, N-vinylpyrrolidone and the esters, nitriles and amides of acrylic acid and methacrylic acid

is hydrolyzed.

**6.** A stable water-in-oil emulsion of a hydrolyzed polymer of N-vinylamides, obtainable by the process of any of claims 1 to 5.

**7.** Use of a water-in-oil emulsion of hydrolyzed poly-N-vinylamides, obtainable as claimed in any of claims 1 to 5, as drainage and retention aids and as flocculants in papermaking and in the production of paper products.

**Revendications**

**1.** Procédé de préparation d'émulsions eau-dans-huile stables de polymères hydrolysés de N-vinylamides de la formule

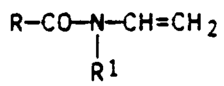

(I),

dans laquelle R, $R^1$ = H ou alkyle en $C_1$ à $C_6$, par la polymérisation de composés de la formule I, seuls ou en mélange à d'autres monomères monoéthyléniquement insaturés, en présence d'amorceurs de polymérisation et d'émulsifs, sous forme d'émulsions eau-dans-huile à émulsions de polymères eau-dans-huile, qui contiennent 10 à 70% en poids d'une oléophase et 10 à 70% en poids de polymère qui présente au moins 10% molaires d'unités vinylamide et l'hydrolyse subséquente des polymères à des températures de 30 à 170 °C, en sorte que de 5 à 100% des unités vinylamide soient hydrolysés et que des émulsions de polymères eau-dans-huile d'une viscosité de 20 à 10.00 mPas (mesurée à 20 °C) soient présentes, caractérisé en ce que l'on entreprend l'hydrolyse des polymères sous forme d'émulsions eau-dans-huile en présence d'acides ou de bases et de 1 à 30% en poids, par rapport aux polymères, d'émulsifs, que l'on peut obtenir par la réaction

(A) d'alcools gras en $C_{10}$ à $C_{22}$ avec l'épichlorhydrine, dans le rapport molaire 1:0,5 à 1:1,5, de manière à obtenir des éthers glycidyliques,

(B) la réaction des éthers glycidyliques avec (1) des alcools en $C_2$ à $C_6$, contenant de 2 à 6 radicaux OH, saturés, ou (2) leurs monoéthers avec des alcools gras en $C_{10}$ à $C_{22}$, dans le rapport molaire de l'éther glycidylique vis-à-vis de (1) ou de (2) de 1:0,5 à 6, en présence d'acides ou de bases et

(C) l'alcoxylation des produits de la réaction obtenus en (B) avec au moins un oxyde d'alkylène en $C_2$ à $C_4$, dans le rapport molaire de 1:1 à 6.

**2.** Procédé suivant la revendication 1, caractérisé en ce que l'on polymérise les composés de la formule I, seuls ou en mélange à d'autres monomères monoéthyléniquement insaturés, sous forme d'une émulsion eau-dans-huile, en présence d'émulsifs, que l'on peut obtenir par la réaction

(A) d'alcools gras en $C_{10}$ à $C_{22}$ avec l'épichlorhydrine, dans le rapport molaire de 1:0,5 à 1:1,5, de manière à obtenir des éthers glycidyliques,

(B) la réaction des éthers glycidyliques avec (1) des alcools en $C_2$ à $C_6$, contenant de 2 à 6 radicaux OH, saturés, ou (2) leurs monoéthers avec des alcools gras en $C_{10}$ à $C_{22}$, dans le rapport molaire de l'éther glycidylique à (1) ou (2) de 1:0,5 à 6, en présence d'acides ou de base et

(C) l'alcoxylation des produits de la réaction obtenus en (B) avec au moins un oxyde d'alkylène en $C_2$ à $C_4$ dans le rapport molaire de 1:1 à 6,

de manière à obtenir des émulsions de polymères eau-dans-huile et en ce que l'on ajoute ensuite un acide ou une base à l'émulsion de polymère eau-dans-huile, afin d'hydrolyser les unités des composés de la formule I incorporées par polymérisation aux polymères.

**3.** Procédé suivant la revendication 1 ou 2, caractérisé en ce que de 5 à 100% des unités des composés de la formule I incorporées par polymérisation aux polymères sont hydrolysés.

4. Procédé suivant les revendications 1 à 3, caractérisé en ce que l'on utilise le N-vinylformamide à titre de composé de la formule I.

5. Procédé suivant l'une quelconque des revendications 1 à 3, caractérisé en ce que l'on hydrolyse des copolymères de
   (a) 95 à 10% molaires de N-vinylformamide avec
   (b) 5 à 90% molaires d'un monomère éthyléniquement insaturé, appartenant au groupe formé par l'acétate de vinyle, le propionate de vinyle, les éthers alkyl($C_1$-$C_4$)vinyliques, la N-vinylpyrrolidone, les esters, les nitriles et les amides de l'acide acrylique et de l'acide méthacrylique.

6. Emulsions eau-dans-huile stables de polymères hydrolysés de N-vinylamides, que l'on peut obtenir par mise en oeuvre du procédé suivant l'une quelconque des revendications 1 à 5.

7. Utilisation des émulsions eau-dans-huile que l'on peut obtenir par mise en oeuvre du procédé suivant l'une quelconque des revendications 1 à 5, de poly-N-vinylamides hydrolysés à titre d'agents de déshydratation ou d'égouttage, de rétention et de floculation au cours de la fabrication du papier et de produits à base de papier.